# EUROPEAN PATENT SPECIFICATION

(11) **EP 2 751 971 B1**
(45) Date of publication and mention of the grant of the patent: **25.05.2016**
(21) Application number: 12753130.9
(22) Date of filing: 30.08.2012
(51) Int. Cl.: H04L 29/06

(54) **HOME ROUTING FOR IMS ROAMING USING VPLMN ANCHOR**
HOME-ROUTING FÜR EIN IMS-ROAMING MITHILFE EINES VPLMN-ANKERS
ROUTAGE DOMESTIQUE POUR ITINÉRANCE IMS AU MOYEN D'UNE ANCRE DE RÉSEAU VPLMN

(30) Priority: 31.08.2011 US 201161529423 P
(43) Date of publication of application: 09.07.2014
(73) Proprietor: Telefonaktiebolaget LM Ericsson (publ), 164 83 Stockholm (SE)
(72) Inventor: LINDHOLM, Fredrik, SE-112 15 Stockholm (SE); ÖSTER, Gert, SE-175 48 Järfälla (SE)
(74) Representative: Lind, Robert
(86) International application number: PCT/EP2012/066924
(87) International publication number: WO 2013/030313

(56) References cited:
- ALCATEL-LUCENT: "Home routing option for RAVEL", 3GPP DRAFT; S2-113635_WAS_2970_RAVEL_HOME_ROUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Naantali; 20110711, 14 July 2011 (2011-07-14), pages 1-4, XP050548879, [retrieved on 2011-07-14]
- "3rd Generation Partnership Project; Technical Specification Group Services and System Aspects; Study on Roaming Architecture for Voice over IMS with Local Breakout; Release 11", 3GPP STANDARD; 3GPP TR 23.850, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 19 July 2011 (2011-07-19), pages 1-24, XP050553631, [retrieved on 2011-07-19] cited in the application
- ERICSSON ET AL: "Alternative approach for CS Copycat model with Home routing", 3GPP DRAFT; S2-113867_S2-113851_REV02, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20110906, 12 September 2011 (2011-09-12), pages 1-4, XP050549054, [retrieved on 2011-09-12]

## Description

### Technical Field

The present invention relates to methods and apparatus for handling Internet Multimedia Subsystem (IMS) session establishment for an originating call from a user equipment (UE) in an access network the UE is visiting. In particular, the invention relates to methods and apparatus for anchoring the originating call in the home network associated with the UE when it is determined to perform home network roaming via the access network or direct home roaming.

### Background

IP Multimedia services provide a dynamic combination of voice, video, messaging, data, etc. within the same session. By growing the number of basic applications and the media which it is possible to combine, the number of services offered to the end subscribers will grow, and the inter-personal communication experience will be enriched. This will lead to a new generation of personalised, rich multimedia communication services, including so-called "combinational IP Multimedia" services.

IP Multimedia Subsystem (IMS) is the technology defined by the Third Generation Partnership Project (3GPP) and ETSI TISPAN group to provide IP Multimedia services over mobile communication networks. IMS provides key features to enrich the end-subscriber person-to-person communication experience through the use of standardised IMS Service Enablers, which facilitate new rich person-to-person (client-to-client) communication services as well as person-to-content (client-to-server) services over IP-based networks. The IMS makes use of the Session Initiation Protocol (SIP) to set up and control calls or sessions between subscriber terminals (or subscriber terminals and application servers). The Session Description Protocol (SDP), carried by SIP signalling, is used to describe and negotiate the media components of the session. Whilst SIP was created as a subscriber-to-subscriber protocol, IMS allows operators and service providers to control subscriber access to services and to charge subscribers accordingly.

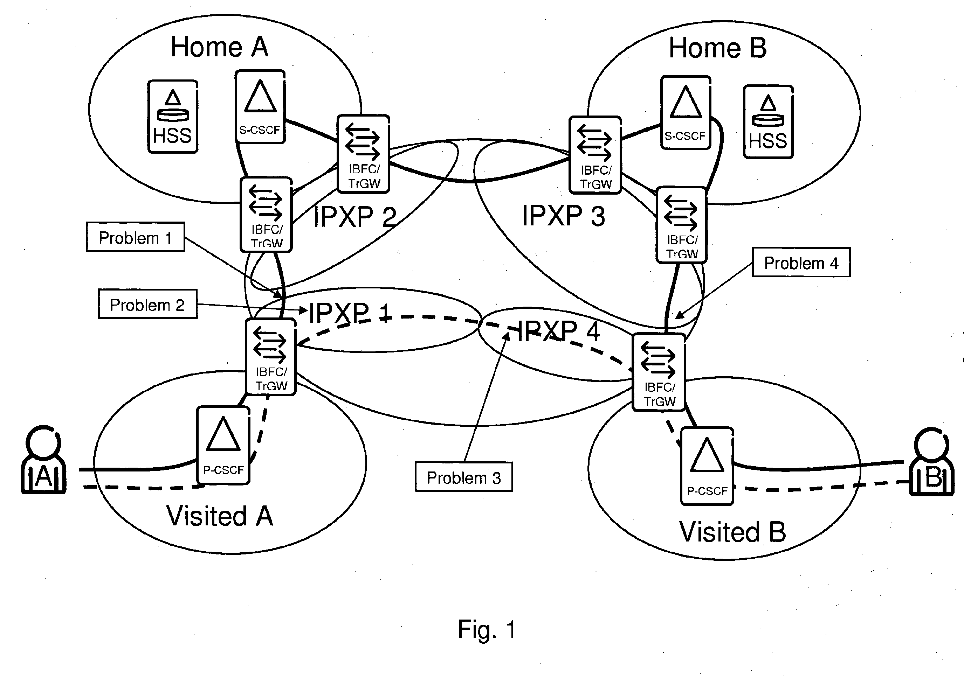

By way of example, Figure 1 illustrates schematically a telecommunications network showing an example of the IMS network architecture used for roaming users when they place a call in a visited access network such as a Visited Public Land Mobile Network (VPLMN). In this example, a calling party A (or UE A) is visiting the VPLMN for party A (also referred to as Visited A, VPLMN A or Visited operator for party A) and places a call to a called party B visiting VPLMN for party B (Visited B or VPLMN B). Each access network or PLMN includes some IMS architecture such as Interconnection Border Control Function (IBCF) or Translation Gateway nodes (TrGw) that connect the PLMNs with each other via core networks for example those based on Internetwork Packet Exchange (IPX) 1, 2, 3 and 4. An IBCF is an interconnecting gateway between an IMS network and other IP networks e.g. other IMS networks or core networks etc. Each PLMN includes some IMS architecture such as registrar nodes associated with the various access domains (or networks) such as Call/Session Control Functions (CSCFs), which operate as SIP proxies within the IMS. The 3GPP architecture defines three types of CSCFs: the Proxy CSCF (P-CSCF) which is the first point of contact within the IMS for a SIP terminal i.e. calling party A; the Serving CSCF (S-CSCF) (not shown in VPLMN) which provides services to the subscriber that the subscriber is subscribed to; and the Interrogating CSCF (I-CSCF) whose role is to identify the correct S-CSCF and to forward to that S-CSCF a request received from a SIP terminal via a P-CSCF.

Within the IMS network architecture, Application Servers (ASs) are provided for implementing IMS service functionality. ASs provide services to end users in an IMS system, and may be connected either as end-points over the 3GYP defined Mr interface, or "linked in" by an S-CSCF over the 3GPP defined IMS Service Control (ISC) interface. In the latter case, Initial Filter Criteria (IFC) are used by an S-CSCF to determine which ASs should be "linked in" during a SIP Session establishment (or indeed for the purpose of any SIP method, session or non-session related). The IFCs are received by the S-CSCF from a home subscriber server (HSS) during the IMS registration procedure as part of a user's or subscriber's Subscriber Profile.

The user equipment (UE) for a calling or called party may comprise or represent any device used for communications. Examples of user equipment that may be used in certain embodiments of the described network are wireless devices such as mobile phones, terminals, smart phones, portable computing devices such as lap tops, handheld devices, tablets, netbooks, computers, personal digital assistants and other wireless communication devices, or wired communication devices such as telephones, computing devices such as desktop computers, set-top boxes, and other fixed communication devices.

When a roaming user such as calling party A (or UE A) places a call to the called party B (or UE B) the call set-up process involves an originating call associated with UE A and a terminating call associated with UE B. The terms "originating call" and "terminating call" may comprise or represent the connection set-up and signalling in relation to UE A or UE B, respectively. Examples of originating or terminating calls that may be used in certain embodiments of the described network include, but are not limited to, the connection set-up signalling enabling a communication connection to be made between UE A and UE B in the two call halves model. The originating call is the connection set-up and signalling for UE A in the first call half and the terminating call is the connection set-up and signalling for connecting the call with UE B in the second call half.

Work has started in 3GPP on the aspects of IMS roaming, and the possibility to ensure that current circuit switched (CS) roaming charging and business relationships can be reused (see 3GPP Technical Specification (TS) 23.850v030). To mimic the CS model, it is important to allow the IMS signalling to be routed back to the VPLMN after service execution has been performed in the HPLMN. That way, the VPLMN will be in charge for the call termination, allowing the VPLMN to settle the charges of the terminating network, and to recharge these and its own charges back to the HPLMN. A special aspect of this is the case where the HPLMN actually would like to do the call termination instead of the VPLMN or any other network.

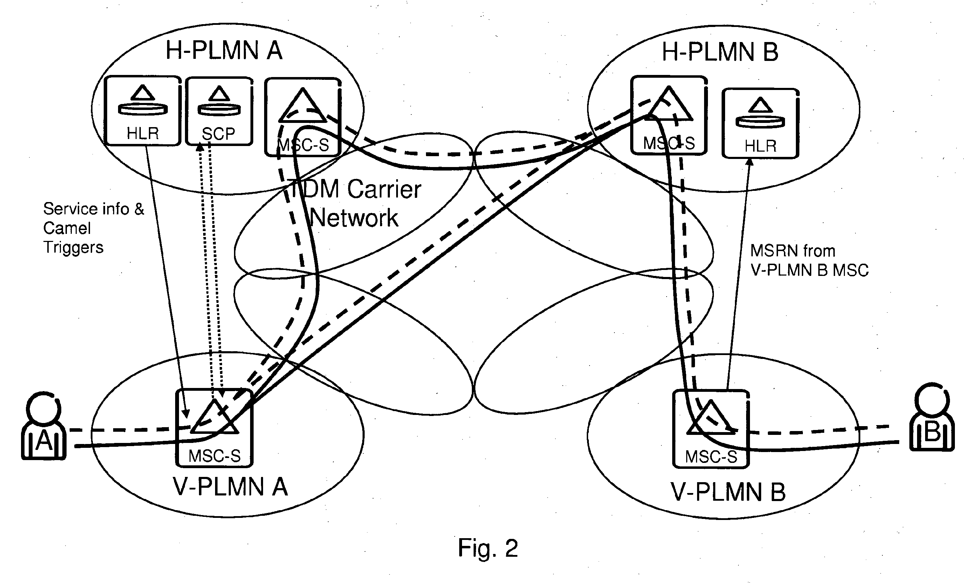

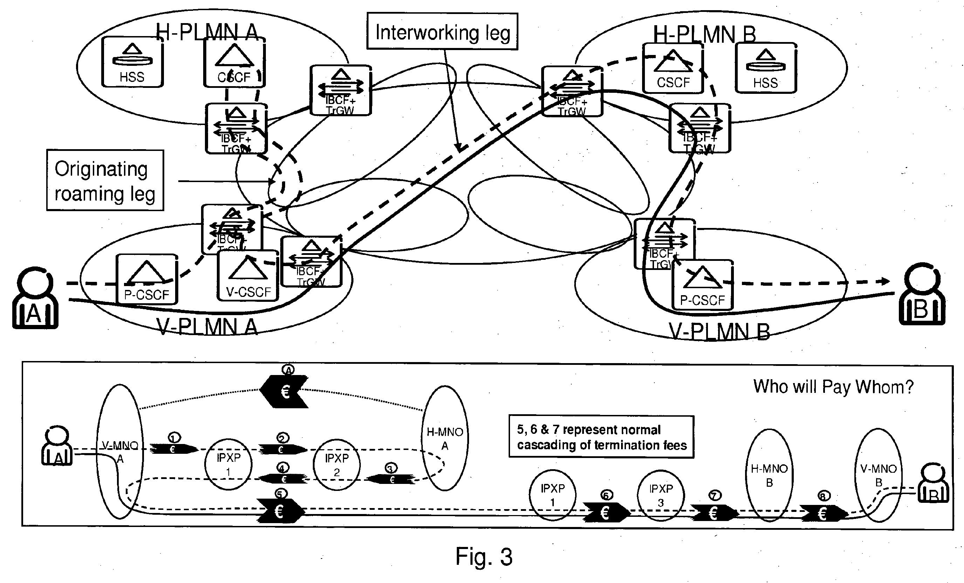

Figure 1 further illustrates the problems associated with existing IMS roaming architectures, where the solid line extending between user A and user B illustrates the IMS signalling path and the dashed line illustrates the media path. The first problem (Problem 1) illustrates that different business relationship for CS and IMS roaming between HPLMN A and VPLMN A (Home and Visited A) is required, this complicates arrangements between operators and would lead to further infrastructure to handle charging and routing. A second problem (Problem 2) is illustrated in that how does the VLPMN A (visited A) know that VPLMN B (visited B) supports IMS roaming, this means that direct routing of the media from VPLMN A to VPLMN B may not be possible. A third problem identified (Problem 3) is that it is difficult to determine the charging for termination fees from IPXP 1 to IPXP 4, as no signalling traverses this network, which may require new business relationship between carriers and service providers. This further complicates the relationships. Similarly, the fourth problem identified (Problem 4) is based on what grounds will the termination fees be distributed between IPXP3 and IPXP 4. Figure 2 illustrates the conventional CS roaming architecture, whilst Figure 3 illustrates a desired IMS roaming architecture which attempts to mimic the CS architecture, where the dashed line indicates IMS signalling and the solid line indicates media. Figure 3 also illustrates the inter-operator billing model.

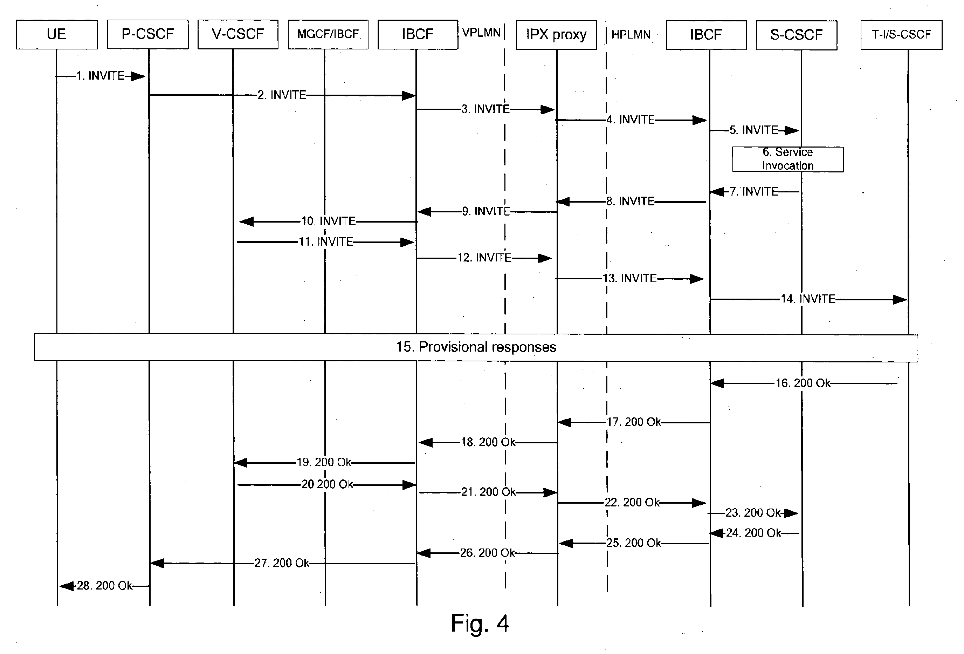

Home routing could be done in different ways, and some of these are described in 3GPP TS 23.850v030. Figure 4 illustrates the case where a call originating in the VPLMN is routed to the HPLMN, then back to the VPLMN, and then back again to the HPLMN. The reason for routing signalling back to VPLMN is to mimic the CS charging model, and also allow potential visited services specific procedures to be applied. In this example, the initial session establishment request (INVITE 1) sent by the UE to the VPLMN does not necessarily contain a globally routable called party identity. As such, the HPLMN must return the INVITE to the VPLMN with the correct identity (as a result of number normalization). The VPLMN can then resend the INVITE with the correct identity. This second session establishment request (INVITE 11) is then accompanied by the media path, i.e. from the VPLMN, via the IPX Proxy, to the HPLMN and onward to any further network. This allows network operators to rely upon existing business models for inter-operator charging. Of course, if the terminating network is a network other than the HPLMN, the second INVITE 11 is forwarded to that other network, allowing media to be established along the same path and allowing existing charging models to be applied.

The problem with the current proposal for home routing for IP networks, based on the tromboning to the VPLMN (Figure 4), is that the call is not "continuing" in the originating HPLMN and routed onwards as an originating call. Instead it may be more regarded as a transit or terminating case for the call. This also means that charging is more difficult to apply as there would be a need for more off-line correlation of the Charging Data Records (CDRs) to correlate the first INVITE coming from the VPLMN with any second INVITE in relation to the originating call.

Therefore, there is a significant need to provide a mechanism for efficiently handling IMS session establishment of originating calls for roaming users such as, for example, to minimise or even eliminate incorrect routing of the signalling and media paths of originating calls from roaming users. Other needs also include a mechanism providing simpler application of charging and other services in relation the originating calls.

Alcatel-Lucent, "Home routing option for RAVEL", 3GPP draft, vol. SA WG2, no. Naantali, 14 July 2011 (2011-07-14), pages 1-4, XP050548879 discloses that home routing is usually provided in the CS domain through the invocation of a CAMEL origination trigger to redirect an originating request to an application function in the HPLMN. An alternate use case for home routing is when the roaming subscriber makes an originating request to another subscriber in the home network. XP050548879 examines these two use cases to show that extra signalling is wasteful and that existing IMS procedures fully satisfy RAVEL requirements.

### Summary

It has been recognised here that whilst there are certain mechanisms for IMS routing of an originating call from a visited access network that a calling party (e.g. UE A) is visiting towards a called party or service, none of the relevant standards or systems allow for the home network of the calling party or HPLMN to route the originating call towards the called party while at the same time keeping the same type of business and signalling model as when the visiting network routes the media to the terminating network. The VPLMN should be able to use the same procedures with the anchor function both for a home routing user case and a delegated routing case.

The present invention provides the advantages of allowing IMS roaming for an originating call from roaming UEs to be routed from the visited access network to the home network for further processing to ensure correct service invocation and to provide that the signaling and media paths are set-up to follow the same route. This provides efficient routing of the call and also allows correct charging to be applied by allowing IMS networks by providing the signalling route back to the VPLMN, which allows the service execution to be resumed after the route back to the VPLMN, thereby ensuring that origination charging and services are performed correctly. The present invention also allows IMS networks to, depending on the user profile, directly route the originating call from the home network to the called party, thereby further ensuring that origination services and charging are performed both correctly and efficiently.

According to a first aspect of the invention there is provided a method of operating a first network node in a home network for handling IMS session establishment of an originating call from a UE in a visited access network, wherein the first network node includes the functionality of an application server. The method includes receiving a first session establishment request associated with the originating call, the received first session establishment request including a called party number associated with the originating call. Storing the called party number associated with the first session establishment request. Modifying the first session establishment request by including a routing number identifying the first network node in the request. Transmitting the modified first session establishment request towards the visited access network for further originating call processing.

Optionally, the method includes receiving a further session establishment request including the routing number identifying the first network node. Retrieving the called party number associated with the further session establishment request. Modifying the further session establishment request by including the called party number in the request. Transmitting the modified further session establishment request to a second network node in the home network configured for use in resuming service execution of services associated with the originating call, wherein the second network node includes the functionality of a call session control function.

Optionally, the method further includes determining whether home routing of the originating call via the visited access network is required, and generating the routing number when home routing of the originating call is required. As an option, determining whether home routing is required is based on the user profile associated with the first session establishment request. Alternatively or additionally, the method further includes determining whether direct home routing of the originating call is required, and transmitting the first session establishment request to the second network node in the home network configured for use in resuming service execution of services associated with the originating call.

Optionally, the step of modifying the first session establishment request further includes substituting the called party number with the routing number. Additionally or alternatively, the step of retrieving the called party number further includes correlating the further session establishment request with a previous received session establishment request associated with the originating call, where the correlation is performed based on at least one of: the routing number, the called party number; and/or a session identity associated with the session establishment requests.

As an option, when the further session establishment request includes the routing number identifying the first network node, then the step of modifying includes substituting the routing number identifying the first network node with the called party number. As an option, the session initiation requests are Session Initiation Protocol INVITE request messages.

The method may further comprise operating a second network node in a home network for handling IMS session establishment of an originating call from a UE in a visited access network, wherein the second network node includes the functionality of a call session control function. The method includes receiving a first session establishment request associated with the originating call. The first session establishment request including a called party number associated with the call. The method includes determining whether the UE is visiting the access network. When the UE is visiting the access network, the method further includes performing the steps of: forwarding the first session establishment request associated with the originating call to a first network node configured for handling roaming UEs, wherein the first network node includes the functionality of an application server; suspending execution of service invocation of the originating call associated with the UE; receiving a further session establishment request associated with the originating call from the first network node, the second session establishment request associated with the originating call; and performing execution of service invocation of the originating call associated with the UE based on the further session establishment request.

As an option, the step of performing execution of service invocation of the originating call further includes anchoring the originating call within the home network and performing routing of a terminating call associated with the originating call. As an option, the session initiation requests are SIP INVITE request messages.

According to a second aspect of the present invention there is provided a first network node for use in a home network for handling IMS session establishment of an originating call from a UE in a visited access network. The network node includes a receiver, a transmitter, a memory unit, and processing logic, the processing logic being connected to the receiver, to the transmitter, and to the memory unit, wherein the first network node includes the functionality of an application server. The receiver is configured to receive a session establishment request associated with the originating call. The processing logic is configured to determine whether the session establishment request is a first session establishment request associated with the originating call and includes a called party number associated with the call. When the session establishment request corresponds to the first session establishment request, then the processing logic is further configured to: store the called party number associated with the session establishment request; and modify the session establishment request by including a routing number identifying the first network node in the request; and the transmitter is configured to transmit the modified session establishment request towards the visited access network for use in originating call routing of the session.

Optionally, the processing logic is further configured to determine whether the session establishment request is a second session establishment request associated with the originating call and includes a routing number identifying the first network node. When the session establishment request corresponds to the second session establishment request, then the processing logic is further configured to: retrieve the called party number associated with the session establishment request; and modify the session establishment request by including the called party number in the request; and the transmitter is further configured to transmit the modified session establishment request to a second network node in the home network configured for use in executing service invocation for the originating call, wherein the second network node includes the functionality of a call session control function.

According to a third aspect of the invention, there is provided a system comprising the first network node of the second aspect of the invention and a second network node for use in a home network for handling IMS session establishment of an originating call from a UE in a visited access network. The second network node includes a receiver, a transmitter, a memory unit, and processing logic, the processing logic being connected to the receiver, to the transmitter, and to the memory unit, wherein the second network node includes the functionality of a call session control function. The receiver is configured to receive a first session establishment request associated with the originating call, the first session establishment request including a called party number associated with the call. The processing logic is configured to determine whether the UE is visiting the access network. When the UE is visiting the visited access network, the processing logic is further configured to: forward, via the transmitter, the first session establishment request associated with the originating call to a first network node according to the second aspect of the invention and configured for handling UEs visiting the visited access network; suspend execution of service invocation of the originating call associated with the UE; receive, from the receiver, a second session establishment request from the first network node, the second session establishment request associated with the originating call; and resume execution of service invocation of the originating call associated with the UE based on the second session establishment request.

The invention provides the advantages of allowing IMS roaming for an originating call from roaming UEs to be routed from the visited access network to the home network for further processing to ensure correct service invocation and to provide that the signaling and media paths are set-up to follow the same route. This provides efficient routing of the call and also allows correct charging to be applied to the call. It further provides a consistent mechanism for the routing of the call by ensuring that the VPLMN will always be included in the routing decision and the exact same charging principles apply irrespective of the HPLMN deciding to anchor the calls or traffic in the home network or whether onward routing of the call is delegated to the VPLMN.

### Brief Description of the Drawings

In order that the invention may be more fully understood, some of the embodiments of the invention will now be described, by way of example only, with reference to the accompanying drawings, in which:
Figure 1 is a schematic illustration of the problems associated with existing IMS roaming architectures;
Figure 2 is a schematic illustration of the conventional CS roaming architecture;
Figure 3 is a schematic illustration of an IMS roaming architecture and inter-operator billing model for IMS routing of an originating call associated with a roaming calling party A;
Figure 4 is a signalling flow diagram of an IMS routing case where a call originating in a VPLMN is routed to the HPLMN;
Figure 5 is a schematic illustration of the signalling (dashed line) and media paths (solid line) for routing an originating call according to the invention;
Figure 6 is a signalling flow diagram illustrating an example of routing an originating call according to the invention;
Figure 7a is a flow diagram illustrating an example process in a home network or HPLMN for use in routing an originating call according to the invention;
Figure 7b is a flow diagram illustrating another example process in the home network for use in routing an originating call according to the invention;
Figure 7c is a flow diagram illustrating a further example process for use in routing an originating call according to the invention;
Figure 8a is a schematic illustration of an example communication system according to the invention;
Figure 8b is a schematic illustration of an example user equipment according to the invention;
Figure 8c is a schematic illustration of an example implementation of one or more network nodes in a base station according to the invention;
Figure 9a is a schematic illustration of an example network node according to the invention; and
Figure 9b is a schematic illustration of another network node according to the invention.

### Detailed Description

In order to overcome the problems identified above with IMS roaming, methods and apparatus or nodes are described for use in handling IMS session establishment for a roaming user in IMS networks. In the scenario illustrated in Figure 4, the HPLMN treats the call like a terminating call and will invoke the appropriate service accordingly. It may however be preferable to treat the call as an originating call given that the subscriber (i.e. UE) is a subscriber of the HPLMN. It is further noted that the existing proposals may allow the second INVITE sent by the VPLMN (i.e. INVITE 11 in Figure 4) to be sent to some network other than the subscriber's HPLMN. This may happen where the subscriber's number has been ported from an old HPLMN to a new HPLMN, and the VPLMN has no knowledge of this porting. It is desirable in such cases to allow the new HPLMN (which received the first INVITE 1) to force the VPLMN to send the second INVITE 11 to the new HPLMN. It may also be desirable to allow the HPLMN to force the VPLMN to send the second INVITE 11 to it, even where the destination network is a network other than that HPLMN.

According to embodiments of the present invention, when a user of a UE initiates a call to a called party, an IMS session establishment request including a called-party destination address, for example a SIP INVITE, is sent by the visited access network (visited network) to the user's home network. Upon receipt of the request in the home network, an IMS network node such as a CSCF, e.g. an S-CSCF, of the home network initiates service invocation, including forwarding the request to an AS responsible for roaming services. The AS stores the original called-party number from the originating request and includes a routing number in the request, identifying the AS within the home network, and causes the request to be returned to the visited network. Upon receipt of the returned request within the visited network, the visited network performs originating call routing of the session and media based on the routing number. The request is then routed to the AS in the home network identified by the routing number, with the AS correlating the received request with the earlier received request, substituting the routing number for the original called-party destination address, and forwarding the request to the CSCF where service invocation is resumed and completed.

An advantage of this approach results in the home network being able to invoke all appropriate services for the roaming calling party or UE, in the same way as would be done for the non-roaming case.

In order to implement the proposed methods and apparatus, new functionality is added to nodes within the home and visited network. For example, within the home network, an S-CSCF may be configured to forward the initial session establishment request to the roaming AS, and to suspend invocation of the service until a further session establishment request is received. The roaming AS, which may be a modified SCC-AS, may be configured to receive the request from the S-CSCF, store the original called-party number, include the roaming number instead of the original called-party number, and return the request to the visited network. Upon the return of the request, the AS correlates the request with the original request, performs the number substitution of the roaming number with the original called-party number, and sends the request to the S-CSCF.

Within the visited network, a modified CSCF, e.g. a Visited CSCF (V-CSCF) or Transit function may be configured to receive the returned request from the AS in the home network, and perform originating call routing of the session and the media based on the routing number, and to forward the request back to the AS.

The present invention provides a mechanism to provide home routing for an AS whilst:
- temporarily stopping service execution while performing the routing back through the VPLMN,
- storing the called-party number and adding a routing number to the request prior to routing it back to the VPLMN, and
- when the request is returned back to the application service, the called-party number is restored and current service execution for the call is resumed.

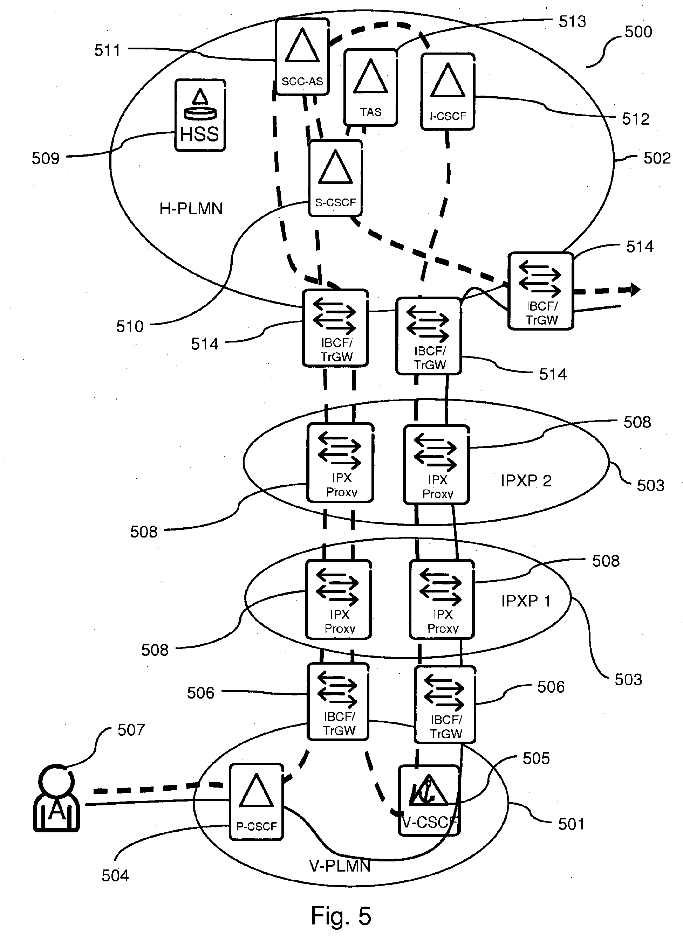

Figure 5 is a schematic illustration of a communication network 500 comprising a V-PLMN 501 and an H-PLMN 502 in communication via IPX networks 503. The signalling (dashed line) and media paths (solid line) for routing an originating call according to the invention are also shown. V-PLMN 501 includes various IMS network nodes such as a P-CSCF/AGW 504, Visiting CSCF 505, and IBCF/TrGW nodes 506. A calling party A, e.g. UE A 507 is shown to be visiting V-PLMN 501. The IPX networks 503 include various nodes such as IPX proxies 508. The H-PLMN 502 includes various IMS nodes and servers such as HSS 509, S-CSCF 510, SCC-AS 511, I-CSCF 512, Telephony Application Server (TAS) 513 and various IBCF/TrGW nodes 514.

The key aspect is the use of an AS in HPLMN 502 (e.g., reusing an existing AS such as SCC AS 511) which, based on the user profile (stored in HSS 509), "breaks" the current service execution, and routes back the originating call to the anchor node in the VPLMN 501 (e.g., V-CSCF 505 or a Transit function) or visited access network that the user is visiting. The AS stores the called-party number and adds a routing number such that the anchor in the VPLMN 501 can send the call back to the AS in the home network 502. When the call is routed back to the AS, the AS restores the called-party number and resumes the service execution, and returns the call to the S-CSCF 510 so that the S-CSCF 510 can continue to invoke additional services as per normal procedures.

In particular, UE-A or calling party A 507 originates a call such that the P-CSCF 504 of the VPLMN 501 receives the initial session establishment request (e.g. SIP INVITE) associated with the originating call. As UE-A 507 is a roaming user, the P-CSCF 504 of the VPLMN 501 forwards the initial session establishment request to the Home PLMN 502 or home network for UE-A 507 via corresponding IBCF/TrGWs 514 and IPX proxies 508. An S-CSCF 510 in the home network 502 is configured to forward the initial session establishment request to the roaming AS and to suspend invocation of the service until the further request is received. As illustrated, the roaming AS is a modified SCC-AS 511, and based on the user profile, the SCC-AS 511 decides whether Home routing is needed. If Home routing is needed, the SCC-AS 511 generates a routing number, stores the original called-party number (B-Party address) within the initial session request, and returns the session establishment request modified to include the generated routing number to the VPLMN 501. The modified session establishment request is directly forwarded to the VPLMN 501. When the session establishment request returns from the SCC-AS 511 of the HPLMN 502, a V-CSCF 505 of the VPLMN 501 performs originating call routing of the session and media based on the B-Part address, which in this case is now the generated routing number. The session establishment request is returned to the HPLMN 501, which is received by the I-CSCF 512 and based on the routing number, the session establishment request is returned to the SCC-AS 511, which re-instates the stored original B-Party address or called-party number. The SCC-AS 511 returns the session request to the S-CSCF 510 over the ISC Interface. SDP now also indicates that media is anchored in the HPLMN 502. On receipt of the session request from the SCC-AS 511, the S-CSCF 510 resumes invocation of the service. After executing originating services in TAS 513, the HPLMN 502 does not route the session to the VPLMN 501, as the media is already anchored in the HPLMN 502 according to SDP. The originating call is then routed from the HPLMN 502 to VPLMN B (not shown), in which the media is "anchored" in every network that the originating call traverses, i.e. follows the path of the call setup and signalling (a call chain).

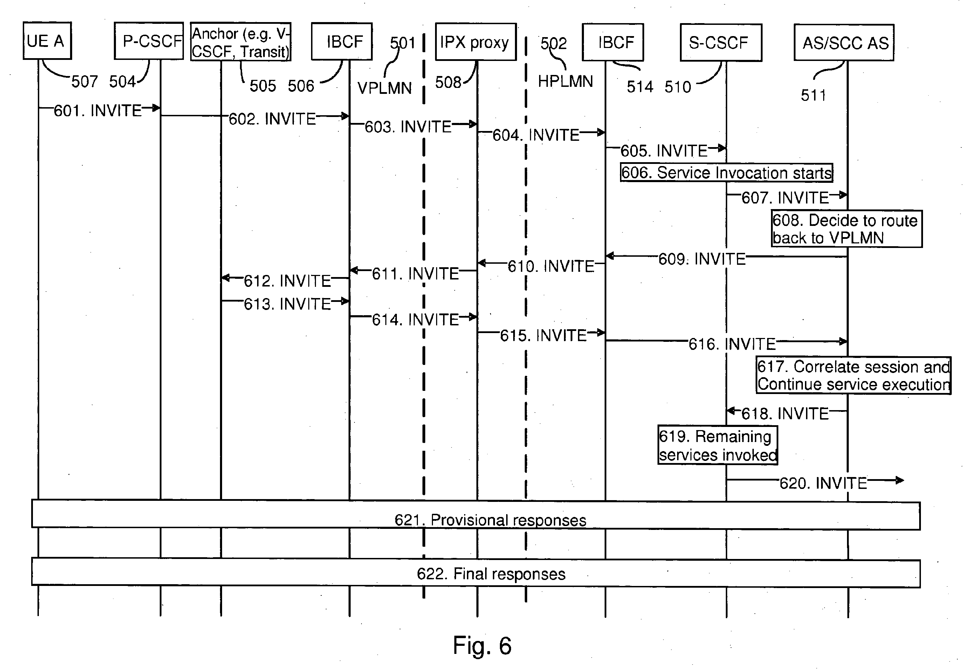

Figure 6 is a signalling flow diagram illustrating an example of routing an originating call according to the invention. The same reference numerals used in Figure 5 will be referred to when describing the same or similar network elements or nodes. Referring now to Figure 6, this illustrates the following procedure.
601-605. The UE 507 initiates a session or call, in which an INVITE (session establishment request) is routed to its S-CSCF 510 in the home network 501 (as per standard procedures).
606. The S-CSCF 510 starts the service invocation and sends the INVITE to the Home Routing AS 511.
607. The AS 511 handling the VPLMN routing is included as a first AS 511 in the chain of application servers, and the S-CSCF 510 forwards the request (INVITE) to the AS 511.
608. Based on the user profile, the AS 511 decides that Home routing is required and generates a routing number. The AS 511 stores the current called-party number for the session. The routing number is added to the request i.e. INVITE (as B party address / called party number), which is then returned to the anchoring function (e.g. V-CSCF 505) in the VPLMN 501 (the anchoring function is known either by configuration or due to that it was explicitly added to the request (INVITE) by the VPLMN 501 in step 602/603).
609-612. The call is routed back to the VPLMN 501. [It will be appreciated that, according to previous proposals, the returned INVITE (session establishment request) contained the actual, globally routable called party identity rather than a routing number identifying the AS 511 as is the case here.]
613. When the session (INVITE) is returned from the HPLMN 502, the anchor function (e.g. V-CSCF 505) in the VPLMN 501 performs originating call routing of the session and the media based on the B-Part address. In this case the routing number identifying the AS 511 in the HPLMN 502.
614-616. The call (INVITE) is forwarded back to the HPLMN 502. As the routing number points to the AS 511, the call is forwarded directly to the AS 511. Thus, the signalling is forced back to the HPLMN 502 and cannot be routed to another network as might otherwise be the case, e.g. where the UE's 507 number has been ported to the HPLMN 502 from another network.
617. The AS 511 receives the request (INVITE) and correlates it with the previous request (INVITE) received in step 607. Correlation may be done on e.g., the routing number only, or a combination of the routing number, calling party identity, and session identity. The AS 511 reinstates the original B-party address stored and continues any service execution required. The SDP now also indicates that media is anchored in the HPLMN 502.
618. The AS 511 returns the session (INVITE) to the S-CSCF 510 over ISC.
619-620. The S-CSCF 510 resumes the service execution of other services, such as the telephony application services. After executing the remaining originating services, the HPLMN 502 does not route the session (INVITE) to the VPLMN 501, as the media already is anchored in the HPLMN 502 according to the SDP. Instead, normal terminating routing is performed.

The VPLMN is able to use the same procedures with the anchor function both for the home routing use case, and the delegated routing case. The procedure as described mimics the CS charging model by providing the signalling route back to the VPLMN. It also allows service execution to be resumed after the route back to the VPLMN, thereby ensuring that origination charging and services are performed correctly.

It is further noted that, as the approach of Figure 6 completes the service invocation in the HPLMN 502 only in response to receipt by the HPLMN 502 of the returned INVITE (613 to 616), step 619 in Figure 6, any early media such as ring tones and service announcements will be included (as SDP) in the 200 OK response to that INVITE. In contrast, with the process illustrated in Figure 4, the early media is provided in the 200 OK response to the first INVITE (601 to 605). The process of Figure 6 is also advantageous as it conforms more closely to the CS business models.

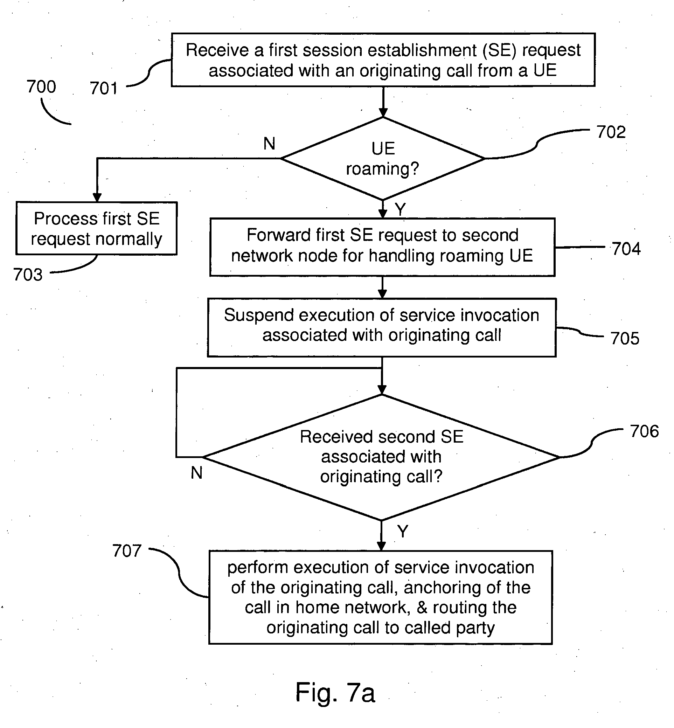

Figure 7a is a flow diagram illustrating an example process 700 for routing an originating call according to the invention. The process 700 is a method of operating a network node such as, for example, a CSCF or S-CSCF node in a home network for handling IMS session establishment of an originating call from a user equipment, UE, in a visited access network, the steps performed are as follows:
701. Receiving a first session establishment request associated with the originating call, the first session establishment request including a called party number associated with the call.
702. Determining whether the UE is visiting the access network, i.e. is the UE roaming. If the UE is visiting the access network, then proceed to step 704, otherwise proceed to step 703.
703. Process the session establishment request using normal procedures.
704. Forwarding, when the UE is visiting the access network, the first session establishment request associated with the originating call to a second network node configured for handling UEs visiting the access network. The second network node may be, for example, an AS such as an SCC-AS. Proceed to step 705.
705. Suspending execution of service invocation of the originating call associated with the UE. Proceed to step 706.
706. When a second session establishment request is received from the second network node, which is associated with the originating call, then proceed to step 707, otherwise, wait until receipt of the second session establishment request.
707. Performing execution of service invocation of the originating call associated with the UE based on the second session establishment request.

The process may further include the step of performing execution of service invocation of the originating call further including anchoring the originating call within the home network and performing routing of a terminating call associated with the originating call. The network node may include the functionality of a call session control function. The second network node may include the functionality of an AS (e.g. an SCC-AS).

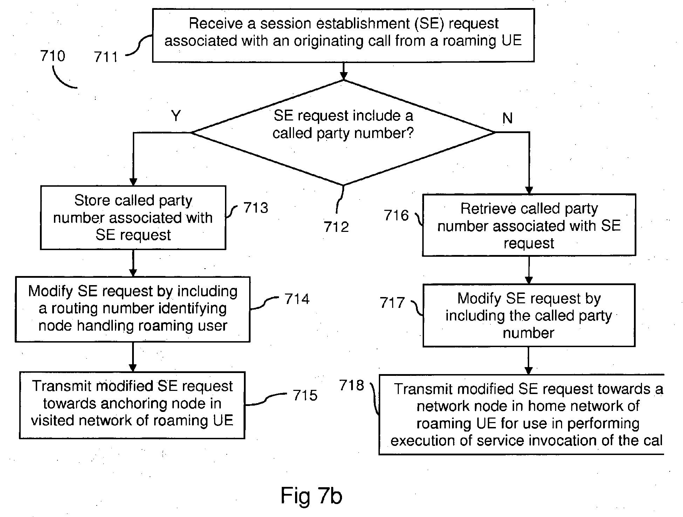

Figure 7b is a flow diagram illustrating another example process 710 for routing an originating call according to the invention. The process 710 is a method of operating a network node such as, for example, an AS or SCC-AS in a home network for handling IMS session establishment of an originating call from a UE in a visited access network, the steps performed are as follows:
711. Receiving a session establishment request associated with the originating call. Proceed to step 712.
712. Determining whether the session establishment request is a first session establishment request associated with the originating call and includes a called party number associated with the call. If the session establishment request is a first session establishment request associated with the originating call and includes a called party number associated with the call, then proceed to step 713. Otherwise, the session establishment request may be a second session establishment request associated with the originating call and may include a routing number identifying the network node, proceed to step 716.
713. Storing the called party number associated with the session establishment request, when the session establishment request corresponds to the first session establishment request. Proceed to step 714.
714. Modifying the session establishment request by including a routing number identifying the network node in the request when the session establishment request corresponds to the first session establishment request.
715. Transmitting the modified session establishment request towards the visited access network for use in further originating call processing (e.g. originating call routing of the session and the media based on the routing number), when the session establishment request corresponds to the first session establishment request.
716. Retrieving the called party number associated with the session establishment request when the session establishment request corresponds to the second session establishment request. Proceed to step 717.
717. Modifying the second session establishment request by including the called party number in the request. Proceed to step 718.
718. Transmitting, when the session establishment request corresponds to the second session establishment request, the modified session establishment request to another network node such as, for example, a CSCF node or S-CSCF node in the home network configured for use in executing service invocation for the originating call.

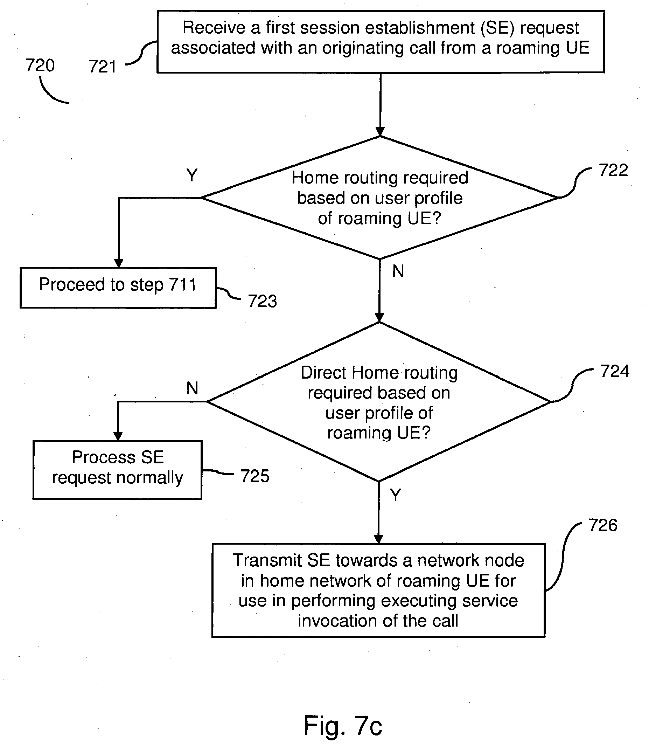

Figure 7c is a flow diagram illustrating another example process 720 for routing an originating call according to the invention. The process 720 is a method based on process 710, the steps performed are as follows:
721. Receiving a session establishment request associated with the originating call. Proceed to step 722.
722. Determining whether home routing of the originating call via the visited access network is required when a first session establishment request associated with the originating call is received. If home routing of the originating call via the access network is required, then proceed to step 723. Otherwise proceed to step 724.
723. Proceed to step 711. This may also involve generating the routing number.
724. Determining whether direct home routing of the originating call is required when the first session establishment request is received. If direct home routing is required, then proceed to step 726. Otherwise, proceed to step 725.
725. Process the session establishment request normally.
726. Transmitting, when direct home routing is required, the session establishment request to the network node in the home network configured for use in executing service invocation for the originating call.

The processes 710 and 720 may further include determining whether home routing is required based on the user profile associated with the first session establishment request. When the session establishment request corresponds to the first session establishment request, then the step of modifying the session establishment request may further include substituting or replacing the called party number with the routing number identifying a network node in the home network configured for handling roaming UEs (e.g. AS or SCC-AS). When the session establishment request corresponds to the second session establishment request, then the step of retrieving the called party number may further include correlating the second session establishment request with the first session establishment request, where the correlation is performed based on at least one of the routing number, the called party number, or a session identity associated with the originating call associated with the requests. When the session establishment request corresponds to the second session establishment request, then the step of modifying includes substituting or replacing the routing number identifying the network node in the home network configured for handling roaming UEs with the called party number. The network node configured for use in executing service invocation may include the functionality of a CSCF or S-CSCF and the network node configured for handling roaming UEs may include the functionality of an AS or SCC-AS.

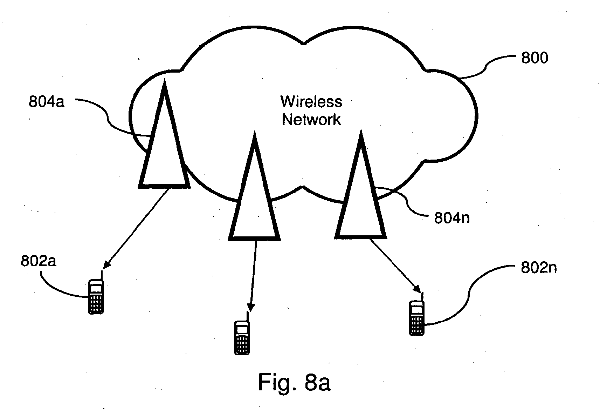

The described solutions may be implemented in any appropriate type of telecommunication system supporting any suitable communication standards and using any suitable components, such as illustrated in Figures 8a to 8c.

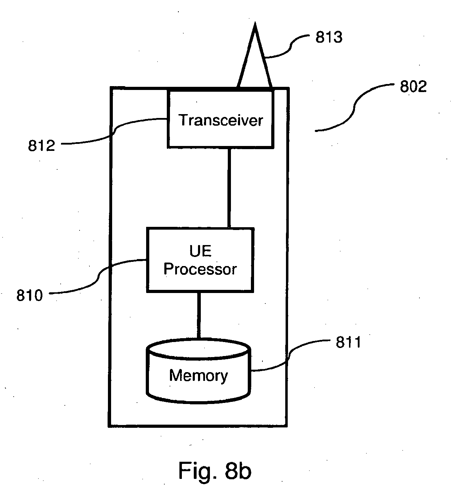

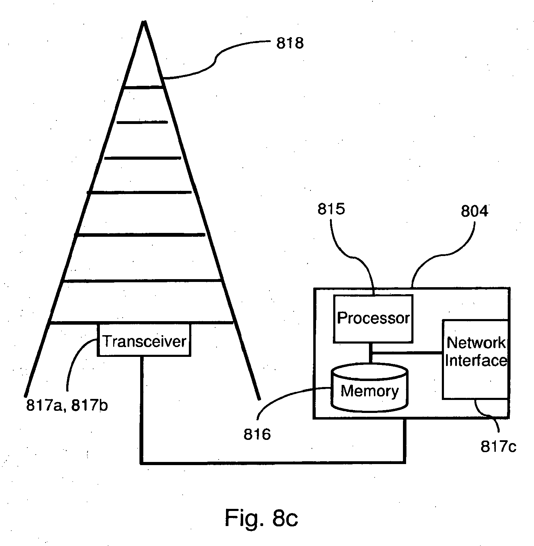

As shown in Figure 8a, an example telecommunication system network 800 may include one or more instances of UEs 802a-802n and one or more base stations 804a-804n capable of communicating with these UEs 802a-802n along with any additional elements suitable to support communication between UEs 802a-802n or between a UE 802a and another communication device (not shown) (e.g. a landline telephone). Although the illustrated UEs 802a-802n may represent communication devices that include any suitable combination of hardware and/or software, these UEs 802a-802n may, in particular embodiments, represent devices such as the example UE 507 described with respect to Figure 5 and, which is, also illustrated in greater detail by Figure 8b. Similarly, illustrated base stations 804a-804n may represent or include network nodes, such as the network nodes (e.g. P-CSCF 504, V-CSCF 505, S-CSCF 510, SCC-AS 511 etc.) described in Figure 5, and include any suitable combination of hardware and/or software, these base stations 804a-804n may, in particular embodiments, represent devices such as the example base station (or network node) 804 illustrated in greater detail by Figure 8c.

The telecommunication network 800 may include a home network (not shown) and a visited access network (not show), where the home network is configured to handle IMS session establishment of an originating call from a UE 802a-802n in the visited access network. The home network may be configured to receive a session establishment request associated with the originating call, the session establishment request including a called party number. The home network may be configured to store the called party number associated with the session establishment request. The home network may be further configured to modify the session establishment request by including a routing number identifying a first network node or base station 804a-804n within the home network in the request and transmit the modified session establishment request towards the visited access network.

In addition, the home network may be further configured to receive a second session establishment request associated with the originating call, the second session establishment request including the routing number identifying the first network node or base station 804a-804n in the home network, retrieve the called party number associated with the first and second session establishment requests, modify the second session establishment request by including the called party number in the request, and perform service execution of services associated with the originating call.

As shown in Figure 8b, the example UE 802 includes a processor 810, a memory 811, a transceiver 812 and an antenna 813. In particular embodiments, some of all of the functionality described above as being provided by mobile communications devices or other forms of UE may be provided by the UE processor 810 executing instructions stored on a computer-readable medium, such as the memory 811 shown in Figure 8b. Alternative embodiments of the UE 802 may include additional components beyond those shown in Figure 8b that may be responsible for providing certain aspects of the UEs functionality, including any of the functionality described above and/or any functionality necessary to support the solution and/or implement embodiments of the invention as described above.

As shown in Figure 8c, the example base station or network node 804 includes a processor or processing logic 815, a memory 816, transceiver 817a, 817b and network interface 817c, which may include a receiver and a transmitter, and an antenna 818. The network interface 817c may be used for receiving and transmitting between other base stations or other network nodes in the telecommunications network 800. In particular embodiments, some or all of the functionality described above as being provided by a mobile base station, a base station controller, a node B, an enhanced node B, and/or any other type of mobile communications node may be provided by the base station processor 815 executing instructions stored on a computer-readable medium, such as a memory 816 shown in Figure 8c. Alternative embodiments of the base station may include additional components responsible for providing additional functionality, including any of the functionality identified above and/or any functionality necessary to support the solution and/or to implement embodiments of the invention as described above.

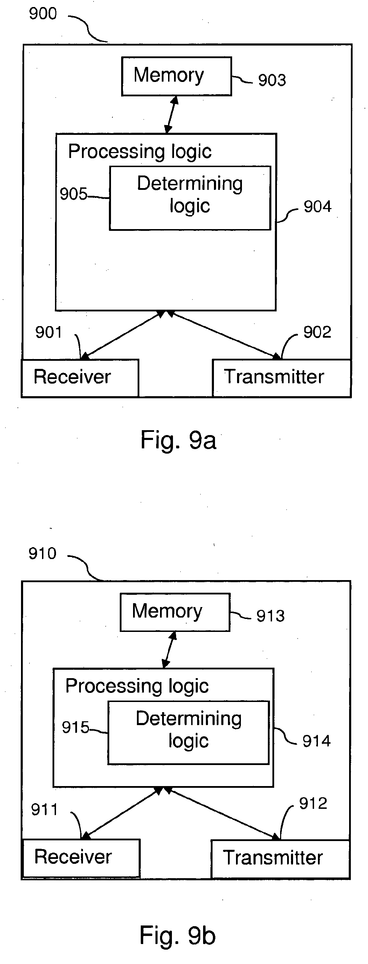

Figure 9a illustrates an example network node 900 (e.g. a CSCF or S-CSCF) for use in a home network for handling IMS session establishment of an originating call from a UE in a visited access network. The functionality of network node 900 may be included in base station 804 or base stations 804a-804b. Network node 900 comprises a receiver 901, a transmitter 902, a memory unit 903, and processor or processing logic 904, the processing logic 904 being connected to the receiver 901, to the transmitter 902, and to the memory unit 903. In operation, the receiver 901 is configured to receive a first session establishment request associated with the originating call, the first session establishment request including a called party number associated with the call. The processing logic 904 is configured to determine 905 whether the UE is visiting the visited access network. When the UE is visiting the visited access network, the processing logic 904 is configured to a) forward, via the transmitter 902, the first session establishment request associated with the originating call to a second network node (e.g. network node 910 or SCC-AS 511) configured for handling roaming UEs or UEs visiting the visited access network, b) suspend execution of service invocation of the originating call associated with the UE, c) receive, from the receiver 901, a second session establishment request from the second network node (e.g. network node 910 or SCC-AS 511), the second session establishment request associated with the originating call, and d) resume execution of service invocation of the originating call associated with the UE based on the second session establishment request.

Figure 9c illustrates another example network node 910 (e.g. an AS or SCC-AS) for use in a home network for handling IMS session establishment of an originating call from a UE in a visited access network. The functionality of network node 910 may be included in base station 804 or base stations 804a-804b. The network node 910 includes a receiver 911, a transmitter 912, a memory unit 913, and processing logic or processor 914, the processing logic 914 being connected to the receiver 911, to the transmitter 912, and to the memory unit 913. In operation, the receiver 911 is configured to receive a session establishment request associated with the originating call. The processing logic 914 is configured to determine 915 whether a) the session establishment request is a first session establishment request associated with the originating call and including a called party number associated with the call or b) the session establishment request is a second session establishment request associated with the originating call and including a routing number identifying network node 910.

When the session establishment request corresponds to the first session establishment request, then: the processing logic 914 is further configured to: store the called party number associated with the session establishment request (e.g. store in memory 913); and modify the session establishment request by including a routing number identifying the network node 910 (e.g. AS or SCC-AS) in the request. The transmitter 912 is configured to transmit the modified session establishment request towards the visited access network for further call processing (e.g. originating call routing of the session and media paths based on the routing number and processing of other services).

When the session establishment request corresponds to the second session establishment request, then: the processing logic 914 is further configured to: retrieve the called party number associated with the session establishment request; and modify the session establishment request by including the called party number in the request. The transmitter 912 is further configured to transmit the modified session establishment request to another network node 900 (e.g. a CSCF or S-CSCF) in the home network configured for use in executing service invocation for the originating call.

The network nodes 900 and/or 910 as herein described can include memory units 903 and 913 and processing logics 904 and 914, which can be used for storing and executing a computer program, comprising computer readable code which, when executed by the processing logics 904 and 914, respectively, causes the network node(s) 900 and/or 910 to perform the relevant methods, procedures, or processes of the invention as described herein. Such computer programs as described herein can be incorporated within one or more computer program products, each comprising a computer readable medium and one or more of the computer programs, where one or more of the computer programs are stored on the computer readable medium.

It will be appreciated by the person of skill in the art that various modifications may be made to the above described examples and/or embodiments without departing from the scope of the present invention as defined by the claims.

## Claims

1. A method of operating a first network node (900) in a home network for handling Internet Protocol Multimedia Subsystem, IMS, session establishment of an originating call from a user equipment, UE (802), in a visited access network, wherein the first network node (900) includes the functionality of an application server, the method comprising the steps of:
receiving a first session establishment request associated with the originating call, the first session establishment request including a called party number associated with the originating call;
storing the called party number associated with the first session establishment request;
modifying the first session establishment request by including a routing number identifying the first network node in the request; and
transmitting the modified first session establishment request towards the visited access network for use in further originating call processing.

2. A method according to claim 1, further comprising:
receiving a further session establishment request associated with the originating call, the further session establishment request including the routing number identifying the first network node;
retrieving the called party number associated with the further session establishment request;
modifying the further session establishment request by including the called party number in the request; and
transmitting the modified further session establishment request to a second network node (910) in the home network for use in resuming service execution of services associated with the originating call, wherein the second network node (910) includes the functionality of a call session control function.

3. A method according to claims 1 or 2, further comprising determining whether home routing of the originating call via the visited access network is required, and generating the routing number when home routing of the originating call is required.

4. A method according to claim 3, wherein determining whether home routing is required is based on the user profile associated with the first session establishment request.

5. A method according to any preceding claim, further comprising determining whether direct home routing of the originating call is required, and transmitting the first session establishment request to the second network node (910) in the home network configured for use in resuming service execution of services associated with the originating call.

6. A method according to any preceding claim, wherein the step of modifying the first session establishment request further comprises substituting the called party number with the routing number.

7. A method according to any preceding claim, wherein the step of retrieving the called party number further comprises correlating the further session establishment request with a previous received session establishment request associated with the originating call, wherein the correlation is performed based on at least one of:
the routing number;
the called party number; and
a session identity associated with the session establishment requests.

8. A method according to any preceding claim, wherein when the further session establishment request includes the routing number, then the step of modifying further comprises substituting the routing number with the called party number.

9. A method according to any preceding claim, wherein the session establishment requests are Session Initiation Protocol INVITE request messages.

10. The method of claim 1, further comprising operating a second network node (910) in a home network for handling Internet Protocol Multimedia Subsystem, IMS, session establishment of an originating call from a user equipment, UE (802), in a visited access network, wherein the second network node (910) includes the functionality of a call session control function, the method comprising the steps of:
receiving a first session establishment request associated with the originating call, the first session establishment request including a called party number associated with the call;
determining whether the UE (802) is visiting the access network and, when the UE (802) is visiting the access network, performing the steps of:
forwarding the first session establishment request associated with the originating call to a first network node (900) configured for handling roaming UEs according to any one of method claims 1 to 9, wherein the first network node (900) includes the functionality of an application server;
suspending execution of service invocation of the originating call associated with the UE (802);
receiving a further session establishment request associated with the originating call from the first network node (900); and
performing execution of service invocation of the originating call associated with the UE (802) based on the further session establishment request.

11. A method according to claim 10, wherein the step of performing execution of service invocation of the originating call further includes anchoring the originating call within the home network and performing routing of a terminating call associated with the originating call.

12. A method according to any of claims 10 or 11, wherein the session establishment requests are Session Initiation Protocol INVITE request messages.

13. A first network node (900) for use in a home network for handling Internet Protocol Multimedia Subsystem, IMS, session establishment of an originating call from a user equipment, UE (802), in a visited access network, the first network node (900) comprising:
a receiver (901), a transmitter (902), a memory unit (903), and processing logic (904), the processing logic (904) being connected to the receiver (901), to the transmitter (902), and to the memory unit (903), wherein the first network node (900) includes the functionality of an application server, and wherein:
the receiver (901) is configured to receive a session establishment request associated with the originating call;
the processing logic (904) is configured to determine whether the session establishment request is a first session establishment request associated with the originating call and includes a called party number associated with the call, and
when the session establishment request corresponds to the first session establishment request, then:
the processing logic (904) is further configured to:
store the called party number associated with the session establishment request; and
modify the session establishment request by including a routing number identifying the first network node in the request; and
the transmitter (902) is configured to transmit the modified session establishment request towards the visited access network for use in further originating call processing.

14. A first network node according to claim 13, wherein the processing logic (904) is further configured to determine whether the session establishment request is a second session establishment request associated with the originating call and includes a routing number identifying the first network node, and
when the session establishment request corresponds to the second session establishment request, then:
the processing logic (904) is further configured to:
retrieve the called party number associated with the session establishment request; and
modify the session establishment request by including the called party number in the request; and
the transmitter (902) is further configured to transmit the modified session establishment request to a second network node (910) in the home network configured for use in executing service invocation for the originating call, wherein the second network node (910) includes the functionality of a call session control function.

15. A system comprising the first network node (900) according to claim 13 or claim 14 and a second network node (910) for use in a home network for handling Internet Protocol Multimedia Subsystem, IMS, session establishment of an originating call from a user equipment, UE, in a visited access network, the second network node comprising:
a receiver (911), a transmitter (912), a memory unit (913), and processing logic (914), the processing logic (914) being connected to the receiver (911), to the transmitter (912), and to the memory unit (913), wherein the second network node (910) includes the functionality of a call session control function, and wherein:
the receiver (911) is configured to receive a first session establishment request associated with the originating call, the first session establishment request including a called party number associated with the call;
the processing logic is configured to determine whether the UE (802) is visiting the visited access network and, when the UE (802) is visiting the visited access network, the processing logic (914) is configured to:
forward, via the transmitter, the first session establishment request associated with the originating call to a first network node according to claims 13 and 14 configured for handling UEs visiting the access network;
suspend execution of service invocation of the originating call associated with the UE;
receive, from the receiver (911), a second session establishment request from the first network node (900), the second session establishment request associated with the originating call; and
resume execution of service invocation of the originating call associated with the UE (802) based on the second session establishment request.

## Patentansprüche

1. Verfahren zum Betreiben eines ersten Netzknotens (900) in einem Heimnetz zum Handhaben des Aufbaus einer IMS-(Internet Protocol Multimedia Subsystem)-Sitzung eines abgehenden Anrufs von einem Benutzerendgerät UE (802) in einem besuchten Zugangsnetz, wobei der erste Netzknoten (900) die Funktionalität eines Applikationsservers hat, wobei das Verfahren die folgenden Schritte beinhaltet:
Empfangen einer mit dem abgehenden Anruf assoziierten ersten Sitzungsaufbauanforderung, wobei die erste Sitzungsaufbauanforderung eine mit dem abgehenden Anruf assoziierte Zielrufnummer beinhaltet;
Speichern der mit der ersten Sitzungsaufbauanforderung assoziierten Zielrufnummer;
Modifizieren der ersten Sitzungsaufbauanforderung durch Einbeziehen einer den ersten Netzknoten identifizierenden Routing-Nummer in die Anforderung; und
Senden der modifizierten ersten Sitzungsaufbauanforderung zu dem besuchten Zugangsnetz zur Verwendung bei der weiteren abgehenden Anrufverarbeitung.

2. Verfahren nach Anspruch 1, das ferner Folgendes beinhaltet:
Empfangen einer mit dem abgehenden Anruf assoziierten weiteren Sitzungsaufbauanforderung, wobei die weitere Sitzungsaufbauanforderung die den ersten Netzknoten identifizierende Routing-Nummer beinhaltet;
Abrufen der mit der weiteren Sitzungsaufbauanforderung assoziierten Zielrufnummer;
Modifizieren der weiteren Sitzungsaufbauanforderung durch Einbeziehen der Zielrufnummer in die Anforderung; und
Senden der modifizierten weiteren Sitzungsaufbauanforderung zu einem zweiten Netzknoten (910) in dem Heimnetz zur Verwendung bei der Wiederaufnahme der Dienstausführung von mit dem abgehenden Anruf assoziierten Diensten, wobei der zweite Netzknoten (910) die Funktionalität einer Rufsitzungssteuerfunktion beinhaltet.

3. Verfahren nach Anspruch 1 oder 2, das ferner das Ermitteln beinhaltet, ob Heim-Routing des abgehenden Anrufs über das besuchte Zugangsnetz erforderlich ist, und Erzeugen der Routing-Nummer, wenn Heim-Routing des abgehenden Anrufs erforderlich ist.

4. Verfahren nach Anspruch 3, wobei das Ermitteln, ob Heim-Routing erforderlich ist, auf dem mit der ersten Sitzungsaufbauanforderung assoziierten Benutzerprofil basiert.

5. Verfahren nach einem vorherigen Anspruch, das ferner das Ermitteln beinhaltet, ob direktes Heim-Routing des abgehenden Anrufs erforderlich ist, und Senden der ersten Sitzungsaufbauanforderung zum zweiten Netzknoten (910) in dem Heimnetz, konfiguriert zur Verwendung bei der Wiederaufnahme der Dienstausführung von mit dem abgehenden Anruf assoziierten Diensten.

6. Verfahren nach einem vorherigen Anspruch, wobei der Schritt des Modifizierens der ersten Sitzungsaufbauanforderung das Substituieren der Zielrufnummer durch die Routing-Nummer beinhaltet.

7. Verfahren nach einem vorherigen Anspruch, wobei der Schritt des Abrufens der Zielrufnummer ferner das Korrelieren der weiteren Sitzungsaufbauanforderung mit einer zuvor empfangenen, mit dem abgehenden Anruf assoziierten Sitzungsaufbauanforderung beinhaltet, wobei die Korrelation auf der Basis von wenigstens einem der Folgenden erfolgt:
der Routing-Nummer;
der Zielrufnummer; und
einer mit den Sitzungsaufbauanforderungen assoziierten Sitzungsidentität.

8. Verfahren nach einem vorherigen Anspruch, wobei, wenn die weitere Sitzungsaufbauanforderung die Routing-Nummer beinhaltet, der Schritt des Modifizierens ferner das Substituieren der Routing-Nummer durch die Zielrufnummer beinhaltet.

9. Verfahren nach einem vorherigen Anspruch, wobei die Sitzungsaufbauanforderungen Session Initiation Protocol INVITE Anforderungsnachrichten sind.

10. Verfahren nach Anspruch 1, das ferner das Betreiben eines zweiten Netzknotens (910) in einem Heimnetz zum Handhaben von IMS-(Internet Protocol Multimedia Subsystem)-Sitzungsaufbau eines abgehenden Anrufs von einem Benutzerendgerät UE (802) in einem besuchten Zugangsnetz beinhaltet, wobei der zweite Netzknoten (910) die Funktionalität einer Rufsitzungssteuerfunktion beinhaltet, wobei das Verfahren die folgenden Schritte beinhaltet:
Empfangen einer mit dem abgehenden Anruf assoziierten ersten Sitzungsaufbauanforderung, wobei die erste Sitzungsaufbauanforderung eine mit dem Anruf assoziierte Zielrufnummer beinhaltet;
Feststellen, ob das UE (802) das Zugangsnetz besucht und, wenn das UE (802) das Zugangsnetz besucht, Ausführen der folgenden Schritte:
Weiterleiten der mit dem abgehenden Anruf assoziierten ersten Sitzungsaufbauanforderung zu einem ersten Netzknoten (900), konfiguriert zum Handhaben von Roaming-UEs nach einem der Verfahrensansprüche 1 bis 9, wobei der erste Netzknoten (900) die Funktionalität eines Applikationsservers beinhaltet;
Unterbrechen der Ausführung eines Dienstaufrufs des mit dem UE (802) assoziierten abgehenden Anrufs;
Empfangen einer mit dem abgehenden Anruf assoziierten weiteren Sitzungsaufbauanforderung vom ersten Netzknoten (900); und
Ausführen eines Dienstaufrufs des mit dem UE (802) assoziierten abgehenden Anrufs auf der Basis der weiteren Sitzungsaufbauanforderung.

11. Verfahren nach Anspruch 10, wobei der Schritt des Ausführens des Dienstaufrufs des abgehenden Anrufs ferner das Verankern des abgehenden Anrufs in dem Heimnetz und das Ausführen von Routing eines mit dem abgehenden Anruf assoziierten eingehenden Anrufs beinhaltet.

12. Verfahren nach Anspruch 10 oder 11, wobei die Sitzungsaufbauanforderungen Session Initiation Protocol INVITE Anforderungsnachrichten sind.

13. Erster Netzknoten (900) zur Verwendung in einem Heimnetz zum Handhaben eines IMS-(Internet Protocol Multimedia Subsystem)-Sitzungsaufbaus eines abgehenden Anrufs von einem Benutzerendgerät UE (802) in einem besuchten Zugangsnetz, wobei der erste Netzknoten (900) Folgendes umfasst:
einen Empfänger (901), einen Sender (902), eine Speichereinheit (903) und Verarbeitungslogik (904), wobei die Verarbeitungslogik (904) mit dem Empfänger (901), dem Sender (902) und der Speichereinheit (903) verbunden ist, wobei der erste Netzknoten (900) die Funktionalität eines Applikationsservers beinhaltet, und wobei:
der Empfänger (901) zum Empfangen einer mit dem abgehenden Anruf assoziierten Sitzungsaufbauanforderung konfiguriert ist;
die Verarbeitungslogik (904) zum Ermitteln konfiguriert ist, ob die Sitzungsaufbauanforderung eine mit dem abgehenden Anruf assoziierte erste Sitzungsaufbauanforderung ist und eine mit dem Anruf assoziierte Zielrufnummer beinhaltet, und
wenn die Sitzungsaufbauanforderung der ersten Sitzungsaufbauanforderung entspricht, dann:
die Verarbeitungslogik (904) ferner konfiguriert ist zum:
Speichern der mit der Sitzungsaufbauanforderung assoziierten Zielrufnummer; und
Modifizieren der Sitzungsaufbauanforderung durch Einbeziehen einer den ersten Netzknoten in der Anforderung identifizierenden Routing-Nummer; und
der Sender (902) zum Senden der modifizierten Sitzungsaufbauanforderung zu dem besuchten Zugangsnetz zur Verwendung bei der weiteren Verarbeitung von abgehenden Anrufen konfiguriert ist.

14. Erster Netzknoten nach Anspruch 13, wobei die Verarbeitungslogik (904) ferner zum Ermitteln konfiguriert ist, ob die Sitzungsaufbauanforderung eine zweite mit dem abgehenden Anruf assoziierte Sitzungsaufbauanforderung ist und eine den ersten Netzknoten identifizierende Routing-Nummer beinhaltet, und
wenn die Sitzungsaufbauanforderung der zweiten Sitzungsaufbauanforderung entspricht, dann:
die Verarbeitungslogik (904) ferner konfiguriert ist zum:
Abrufen der mit der Sitzungsaufbauanforderung assoziierten Zielrufnummer; und
Modifizieren der Sitzungsaufbauanforderung durch Einbeziehen der Zielrufnummer in die Anforderung; und
der Sender (902) ferner zum Senden der modifizierten Sitzungsaufbauanforderung zu einem zweiten Netzknoten (910) in dem Heimnetz konfiguriert ist, konfiguriert zur Verwendung beim Ausführen eines Dienstaufrufs für den abgehenden Anruf, wobei der zweite Netzknoten (910) die Funktionalität einer Rufsitzungssteuerfunktion beinhaltet.

15. System, das den ersten Netzknoten (900) nach Anspruch 13 oder Anspruch 14 und einen zweiten Netzknoten (910) zur Verwendung in einem Heimnetz zum Handhaben eines IMS-(Internet Protocol Multimedia Subsystem)-Sitzungsaufbaus eines abgehenden Anrufs von einem Benutzerendgerät UE in einem besuchten Zugangsnetz umfasst, wobei der zweite Netzknoten Folgendes umfasst:
einen Empfänger (911), einen Sender (912), eine Speichereinheit (913) und Verarbeitungslogik (914), wobei die Verarbeitungslogik (914) mit dem Empfänger (911), dem Sender (912) und der Speichereinheit (913) verbunden ist, wobei der zweite Netzknoten (910) die Funktionalität einer Rufsitzungssteuerfunktion aufweist, und wobei:
der Empfänger (911) zum Empfangen einer mit dem abgehenden Anruf assoziierten ersten Sitzungsaufbauanforderung konfiguriert ist, wobei die erste Sitzungsaufbauanforderung eine mit dem Ruf assoziierte Zielrufnummer beinhaltet;
die Verarbeitungslogik ferner zum Ermitteln konfiguriert ist, ob das UE (802) das besuchte Zugangsnetz besucht, und wenn das UE (802) das besuchte Zugangsnetz besucht, die Verarbeitungslogik (914) konfiguriert ist zum:
Weiterleiten, über den Sender, der mit dem abgehenden Anruf assoziierten ersten Sitzungsaufbauanforderung zu einem ersten Netzknoten gemäß den Ansprüchen 13 und 14, konfiguriert zum Handhaben von das Zugangsnetz besuchenden UEs;
Unterbrechen der Ausführung von Dienstaufruf des mit dem UE assoziierten abgehenden Anrufs;
Empfangen, von dem Empfänger (911), einer zweiten Sitzungsaufbauanforderung vom ersten Netzknoten (900), wobei die zweite Sitzungsaufbauanforderung mit dem abgehenden Anruf assoziiert ist; und
Wiederaufnehmen des Ausführens von Dienstaufruf des mit dem UE (802) assoziierten abgehenden Anrufs auf der Basis der zweiten Sitzungsaufbauanforderung.

## Revendications

1. Procédé d'exploitation d'un premier noeud de réseau (900) dans un réseau domestique pour gérer un établissement de session de sous-système multimédia de protocole Internet, IMS, d'un appel sortant en provenance d'un équipement d'utilisateur, UE (802), dans un réseau d'accès visité, dans lequel le premier noeud de réseau (900) inclut la fonctionnalité d'un serveur d'application, le procédé comprenant les étapes ci-dessous consistant à :
recevoir une première demande d'établissement de session associée à l'appel sortant, la première demande d'établissement de session incluant un numéro de partie appelée associé à l'appel sortant ;
stocker le numéro de partie appelée associé à la première demande d'établissement de session ;
modifier la première demande d'établissement de session en incluant un numéro de routage identifiant le premier noeud de réseau dans la demande ; et
transmettre la première demande d'établissement de session modifiée vers le réseau d'accès visité, afin qu'elle soit utilisée dans le cadre du traitement des appels sortants ultérieurs.

2. Procédé selon la revendication 1, comprenant en outre les étapes ci-dessous consistant à :
recevoir une demande d'établissement de session supplémentaire associée à l'appel sortant, la demande d'établissement de session supplémentaire incluant le numéro de routage identifiant le premier noeud de réseau ;
récupérer le numéro de partie appelée associé à la demande d'établissement de session supplémentaire ;
modifier la demande d'établissement de session supplémentaire en incluant le numéro de partie appelée dans la demande ; et
transmettre la demande d'établissement de session supplémentaire modifiée à un second noeud de réseau (910) dans le réseau domestique, afin qu'elle soit utilisée dans le cadre d'une reprise de l'exécution de service des services associés à l'appel sortant, dans lequel le second noeud de réseau (910) inclut la fonctionnalité d'une fonction de commande de session d'appel.

3. Procédé selon la revendication 1 ou 2, comprenant en outre l'étape consistant à déterminer si un routage domestique de l'appel sortant, par l'intermédiaire du réseau d'accès visité, est requis, et l'étape consistant à générer le numéro de routage lorsqu'un routage domestique de l'appel sortant est requis.

4. Procédé selon la revendication 3, dans lequel l'étape consistant à déterminer si un routage domestique est requis est basée sur le profil d'utilisateur associé à la première demande d'établissement de session.

5. Procédé selon l'une quelconque des revendications précédentes, comprenant en outre l'étape consistant à déterminer si un routage domestique direct de l'appel sortant est requis, et l'étape consistant à transmettre la première demande d'établissement de session, au second noeud de réseau (910) dans le réseau domestique, configurée en vue d'une utilisation dans le cadre d'une reprise de l'exécution de service des services associés à l'appel sortant.

6. Procédé selon l'une quelconque des revendications précédentes, dans lequel l'étape de modification de la première demande d'établissement de session comporte l'étape consistant à remplacer le numéro de partie appelée par le numéro de routage.

7. Procédé selon l'une quelconque des revendications précédentes, dans lequel l'étape de récupération du numéro de partie appelée comprend en outre l'étape consistant à corréler la demande d'établissement de session supplémentaire avec une précédente demande d'établissement de session reçue associée à l'appel sortant, dans lequel la corrélation est mise en oeuvre sur la base d'au moins l'un des éléments ci-dessous :
le numéro de routage ;
le numéro de partie appelée ; et
une identité de session associée aux demandes d'établissement de session.

8. Procédé selon l'une quelconque des revendications précédentes, dans lequel, lorsque la demande d'établissement de session supplémentaire inclut le numéro de routage, alors l'étape de modification comprend en outre l'étape consistant à remplacer le numéro de routage par le numéro de partie appelée.

9. Procédé selon l'une quelconque des revendications précédentes, dans lequel les demandes d'établissement de session sont des messages de demande d'invitation « INVITE » de protocole d'ouverture de session.

10. Procédé selon la revendication 1, comprenant en outre l'étape consistant à exploiter un second noeud de réseau (910) dans un réseau domestique pour gérer un établissement de session de sous-système multimédia de protocole Internet, IMS, d'un appel sortant en provenance d'un équipement d'utilisateur, UE (802), dans un réseau d'accès visité, dans lequel le second noeud de réseau (910) inclut la fonctionnalité d'une fonction de commande de session d'appel, le procédé comprenant les étapes ci-dessous consistant à :
recevoir une première demande d'établissement de session associée à l'appel sortant, la première demande d'établissement de session incluant un numéro de partie appelée associé à l'appel ;
déterminer si l'équipement UE (802) est en visite dans le réseau d'accès, et lorsque l'équipement UE (802) est en visite dans le réseau d'accès, mettre en oeuvre les étapes ci-dessous consistant à :
acheminer la première demande d'établissement de session associée à l'appel sortant vers un premier noeud de réseau (900) configuré de manière à gérer des équipements UE en itinérance selon l'une quelconque des revendications de procédé 1 à 9, dans lequel le premier noeud de réseau (900) inclut la fonctionnalité d'un serveur d'application ;
suspendre une exécution d'appel de service de l'appel sortant associé à l'équipement UE (802) ;
recevoir une demande d'établissement de session supplémentaire associée à l'appel sortant en provenance du premier noeud de réseau (900) ; et
mettre en oeuvre une exécution d'appel de service de l'appel sortant associé à l'équipement UE (802) sur la base de la demande d'établissement de session supplémentaire.

11. Procédé selon la revendication 10, dans lequel l'étape de mise en oeuvre de l'exécution d'appel de service de l'appel sortant inclut en outre l'étape consistant à ancrer l'appel sortant au sein du réseau domestique et à mettre en oeuvre un routage d'un appel d'arrivée associé à l'appel sortant.

12. Procédé selon l'une quelconque des revendications 10 et 11, dans lequel les demandes d'établissement de session sont des messages de demande d'invitation « INVITE » de protocole d'ouverture de session.

13. Premier noeud de réseau (900) destiné à être utilisé dans un réseau domestique pour gérer un établissement de session de sous-système multimédia de protocole Internet, IMS, d'un appel sortant en provenance d'un équipement d'utilisateur, UE (802), dans un réseau d'accès visité, le premier noeud de réseau (900) comprenant :
un récepteur (901), un émetteur (902), une unité de mémoire (903) et une logique de traitement (904), la logique de traitement (904) étant connectée au récepteur (901), à l'émetteur (902) et à l'unité de mémoire (903), dans lequel le premier noeud de réseau (900) inclut la fonctionnalité d'un serveur d'application, et dans lequel :
le récepteur (901) est configuré de manière à recevoir une demande d'établissement de session associée à l'appel sortant ;
la logique de traitement (904) est configurée de manière à déterminer si la demande d'établissement de session est une première demande d'établissement de session associée à l'appel sortant et si elle inclut un numéro de partie appelée associé à l'appel ; et
lorsque la demande d'établissement de session correspond à la première demande d'établissement de session, alors :
la logique de traitement (904) est en outre configurée de manière à :
stocker le numéro de partie appelée associé à la demande d'établissement de session ; et
modifier la demande d'établissement de session en incluant un numéro de routage identifiant le premier noeud de réseau dans la demande ; et
l'émetteur (902) est configuré de manière à transmettre la demande d'établissement de session modifiée vers le réseau d'accès visité, afin qu'elle soit utilisée dans le cadre d'un traitement des appels sortants ultérieurs.

14. Premier noeud de réseau selon la revendication 13, dans lequel la logique de traitement (904) est en outre configurée de manière à déterminer si la demande d'établissement de session est une seconde demande d'établissement de session associée à l'appel sortant et si elle inclut un numéro de routage identifiant le premier noeud de réseau ; et
lorsque la demande d'établissement de session correspond à la seconde demande d'établissement de session, alors :
la logique de traitement (904) est en outre configurée de manière à :
récupérer le numéro de partie appelée associé à la demande d'établissement de session ; et
modifier la demande d'établissement de session en incluant le numéro de partie appelée dans la demande ; et
l'émetteur (902) est en outre configuré de manière à transmettre la demande d'établissement de session modifiée, à un second noeud de réseau (910) dans le réseau domestique, configurée en vue d'une utilisation dans le cadre de l'exécution d'un appel de service pour l'appel sortant, dans lequel le second noeud de réseau (910) inclut la fonctionnalité d'une fonction de commande de session d'appel.

15. Système comprenant le premier noeud de réseau (900) selon la revendication 13 ou 14, et un second noeud de réseau (910) destiné à être utilisé dans un réseau domestique pour gérer un établissement de session de sous-système multimédia de protocole Internet, IMS, d'un appel sortant en provenance d'un équipement d'utilisateur, UE, dans un réseau d'accès visité, le second noeud de réseau comprenant :
un récepteur (911), un émetteur (912), une unité de mémoire (913) et une logique de traitement (914), la logique de traitement (914) étant connectée au récepteur (911), à l'émetteur (912) et à l'unité de mémoire (913), dans lequel le second noeud de réseau (910) inclut la fonctionnalité d'une fonction de commande de session d'appel, et dans lequel :
le récepteur (911) est configuré de manière à recevoir une première demande d'établissement de session associée à l'appel sortant, la première demande d'établissement de session incluant un numéro de partie appelée associé à l'appel ;
la logique de traitement est configurée de manière à déterminer si l'équipement UE (802) est en visite dans le réseau d'accès visité et, lorsque l'équipement UE (802) est en visite dans le réseau d'accès visité, la logique de traitement (914) est configurée de manière à :
acheminer, par l'intermédiaire de l'émetteur, la première demande d'établissement de session associée à l'appel sortant vers un premier noeud de réseau selon les revendications 13 et 14, configuré de manière à traiter des équipements UE visitant le réseau d'accès ;
suspendre l'exécution d'appel de service de l'appel sortant associé à l'équipement UE;
recevoir, à partir du récepteur (911), une seconde demande d'établissement de session en provenance du premier noeud de réseau (900), la seconde demande d'établissement de session étant associée à l'appel sortant ; et
reprendre l'exécution d'appel de service de l'appel sortant associé à l'équipement UE (802), sur la base de la seconde demande d'établissement de session.
